# EUROPÄISCHE PATENTSCHRIFT

(11) **EP 1 078 814 B1**
(45) Veröffentlichungstag und Bekanntmachung des Hinweises auf die Patenterteilung: **29.11.2006**
(21) Anmeldenummer: 00117192.5
(22) Anmeldetag: 11.08.2000
(51) Int. Cl.: B60Q 1/115

(54) **Verfahren und Einrichtung zur Regelung der Leuchtweite eines Kraftfahrzeuges**
Method and device for controlling the lighting distance of a vehicle
Procédé et dispositif de commande de la distance d'éclairage d'un véhicule

(30) Priorität: 24.08.1999 DE 19940098
(43) Veröffentlichungstag der Anmeldung: 28.02.2001
(73) Patentinhaber: Hella KGaA Hueck & Co., 59552 Lippstadt (DE)
(72) Erfinder: Neumann, Andreas, 59555 Lippstadt (DE)

(56) Entgegenhaltungen:
- EP-A- 0 470 401
- EP-A- 0 470 408
- EP-A- 0 928 719
- DE-A- 4 202 908

## Beschreibung

Die vorliegende Erfindung betrifft ein Verfahren zur Regelung der Leuchtweite eines Kraftfahrzeuges gemäß dem Oberbegriff des Anspruchs 1 sowie eine Einrichtung zur Regelung der Leuchtweite eines Kraftfahrzeuges gemäß dem Oberbegriff des Anspruchs 10.

Wenn sich ein Fahrzeug mit Leuchtweitenregelung auf einer schlechten Wegstrecke bewegt, die sich in der Regel durch unregelmäßig angeordnete Unebenheiten auszeichnet, können Fehlfunktionen der Leuchtweitenregelung auftreten. Es besteht beispielsweise die Möglichkeit, daß bei an der Vorderachse und der Hinterachse angeordneten Sensoren, die die Höhe bzw. die Neigung des Fahrzeuges ermitteln können, Verwindungen des Fahrwerkes als Drehungen um die Nickachse interpretiert werden, so daß die Einrichtung zur Leuchtweitenregelung unangebrachte Leuchtweiten einstellt, die beispielsweise zu Blendungen des Gegenverkehrs führen können.

Ein Verfahren sowie eine Einrichtung zur Durchführung des Verfahrens der eingangs genannten Art sind aus der deutschen Offenlegungsschrift DE 196 53 662 A1 bekannt. Bei der darin beschriebenen Einrichtung sind beispielsweise Fahrzeughöhensensoren vorgesehen, die Änderungen in der Fahrzeughöhe in der Nähe des rechten vorderen und linken hinteren Rades eines Fahrzeugs erfassen können. Die Geländeerkennungseinheit gemäß der vorgenannten deutschen Offenlegungsschrift kann die zeitlichen Verläufe der Ausgangssignale dieser beiden Fahrzeughöhensensoren miteinander vergleichen, wobei das Ausgangssignal des an der Hinterachse angeordneten Fahrzeughöhensensors mit einem geschwindigkeitsabhängigen zeitlichen Offset versehen werden kann, um eine Korrelation zwischen den Signalen zu erfassen. Die vorgenannte Einrichtung fällt genau dann eine hinsichtlich des Erkennens einer schlechten Wegstrecke positive Entscheidung, wenn über einen vorgegebenen Meßzeitraum keine Korrelation zwischen den beiden derart miteinander verglichenen Signalen besteht oder aber wenn diese Korrelation relativ klein ist. Falls die Geländeerkennungseinheit eine deutlich ausgeprägte Korrelation zwischen den beiden derart miteinander verglichenen Signalen feststellt, entscheidet sie, daß keine schlechte Wegstrecke vorliegt. Bei einer positiven Entscheidung hinsichtlich des Vorliegens einer schlechten Wegstrecke veranlaßt die Geländeerkennungseinheit die Stelleinrichtungen, die Leuchtweite auf einen bestimmten vorgegebenen Wert einzuregeln. Nach dem Verlassen der schlechten Wegstrecke wird dann die Leuchtweitenregelung wieder frei gegeben.

Als nachteilig bei der vorgenannten Einrichtung und dem mit dieser durchgeführten Verfahren erweist sich, daß ein relativ komplizierter Vergleichsvorgang hinsichtlich der Korrelation der Signale eines vorderen und eines hinteren Fahrzeughöhensensors durchgeführt werden muß. Weiterhin müssen bei der aus dem Stand der Technik bekannten Einrichtung die Fahrzeughöhensensoren auf unterschiedlichen Seiten des Fahrzeugs angeordnet sein.

Das der vorliegenden Erfindung zugrunde liegende Problem ist die Schaffung eines Verfahrens und einer Einrichtung zur Regelung der Leuchtweite eines Kraftfahrzeuges der eingangs genannten Art, das einfach durchführbar ist beziehungsweise die einfach aufgebaut ist.

Dies wird erfindungsgemäß durch die kennzeichnenden Merkmale der Ansprüche 1, 2, 10 und 11 gelöst.

Bei einem Verfahren gemäß Anspruch 1 wird beispielsweise mit einer Einrichtung gemäß Anspruch 10 die Differenz der zu einem ersten Zeitpunkt an der Vorderachse und der Hinterachse gemessenen Signale gebildet und abgespeichert. Daran anschließend wird die Differenz der zu einem zweiten, späteren Zeitpunkt an der Vorderachse und der Hinterachse gemessenen Signale gebildet. Daran anschließend werden die beiden vorgenannten Differenzen voneinander abgezogen, wobei das hierbei erhaltene Signal durch ein der Geschwindigkeit des Kraftfahrzeugs entsprechendes Signal dividiert wird. Wenn das bei dieser Division erhaltene Signal einen vorgegebenen Schwellwert übersteigt, wird von der Geländeerkennungseinheit entschieden, daß eine schlechte Wegstrecke vorliegt. Durch die vorgenannten, beispielsweise in regelmäßigen zeitlichen Abständen wiederholten Differenzbildungen und die daran anschließende Division werden auf einfache und effektive Weise die an der vorderen und der hinteren Achse des Kraftfahrzeugs gemessenen Signale im Hinblick auf die Fahrzeuggeschwindigkeit ausgewertet.

Wenn der Vorderachsgeber und der Hinterachsgeber Signale von beispielsweise Fahrzeughöhensensoren ausgeben, liefert die Differenz der beiden Signale eine Aussage über die Neigung des Fahrzeuges in Fahrtrichtung bzw. über den Nickwinkel. Durch die Differenzbildung zweier in einem vorgegebenen zeitlichen Abstand voneinander bestimmter Differenzen dieser Signale wird somit die zeitliche Änderung der Neigung des Fahrzeuges bestimmt. Vermittels der Division durch das der Geschwindigkeit des Fahrzeuges entsprechende Signal wird gewährleistet, daß nur dann eine positive Entscheidung hinsichtlich des Vorliegens einer schlechten Wegstrecke getroffen wird, wenn sich auch bei langsamer Fahrt innerhalb einer relativ kurzen Zeitspanne die Neigung des Fahrzeuges in Fahrtrichtung beträchtlich ändert. Wenn sich dagegen das Fahrzeug mit hoher Geschwindigkeit auf einer Straße bewegt, die einen kontinuierlichen aber doch beträchtlichen Wechsel der Fahrbahnneigung in Fahrtrichtung aufweist, wie dies beispielsweise bei einer Bergkuppe der Fall ist, wird keine positive Entscheidung hinsichtlich des Erkennens einer schlechten Wegstrecke gefällt, so daß die Leuchtweitenregelung weiterhin in Betrieb bleibt.

Bei dem alternativen Verfahren gemäß Anspruch 2 können beispielsweise mittels einer Einrichtung gemäß Anspruch 11 die an der Vorderachse und die an der Hinterachse gemessenen Signale jeweils mit einem Kennlinienfaktor multipliziert werden, der die jeweilige Kennlinie der die Signale erfassenden Sensoren berücksichtigt. Die Differenz der zu einem ersten Zeitpunkt an der Vorderachse und der Hinterachse gemessenen und mit dem jeweiligen Kennlinienfaktor multiplizierten Signale wird gebildet und abgespeichert. Von dieser Differenz kann die Differenz der zu einem zweiten, späteren Zeitpunkt an der Vorderachse und der Hinterachse gemessenen und mit dem jeweiligen Kennlinienfaktor multiplizierten Signale gebildet werden. Wie bei dem Verfahren gemäß Anspruch 1 wird auch bei diesem Verfahren das in dem vorigen Verfahrensschritt erhaltene Signal durch ein der Geschwindigkeit des Kraftfahrzeuges entsprechendes Signal dividiert und entsprechend mit einem Schwellwert verglichen, um zu entscheiden, ob eine schlechte Wegstrecke vorliegt. Als vorteilhaft hierbei erweist sich, daß bei den mit dem Kennlinienfaktor multiplizierten Signalen bereits die Abhängigkeiten der Signale von der jeweiligen Achssensor-Kinematik berücksichtigt worden sind.

Hierbei kann vorteilhafterweise bei der Differenzbildung der mit dem jeweiligen Kennlinienfaktor multiplizierten Signale derart ein Offsetwert addiert werden, daß das so erhaltene Ausgangssignal als Sollwertsignal für die Leuchtweitenregelung Verwendung finden kann.

Bei den beiden vorgenannten alternativen Ausführungsformen des erfindungsgemäßen Verfahrens können die Verfahrensschritte der Differenzbildung, der Division und des Vergleichs mit dem vorgegebenen Schwellwert in regelmäßigen oder geschwindigkeitsabhängigen Zeitabständen wiederholt werden.

Gemäß einer bevorzugten Ausführungsform der vorliegenden Erfindung besteht die Möglichkeit, bei Vorliegen einer hinsichtlich des Erkennens einer schlechten Wegstrecke positiven Entscheidung die Leuchtweite des Kraftfahrzeugs auf einen vorgegebenen Wert, der vorzugsweise dem Wert bei Normallage des Kraftfahrzeuges entspricht, einzustellen. Alternativ dazu kann bei Vorliegen einer hinsichtlich des Erkennens einer schlechten Wegstrecke positiven Entscheidung die Leuchtweite des Kraftfahrzeugs konstant auf dem zum Zeitpunkt der Entscheidung vorliegenden Wert gehalten werden. Bei beiden Verfahren wird verhindert, daß die Leuchtweite in Abhängigkeit von der häufig wechselnden Neigung des Fahrzeuges auf einer schlechten Wegstrecke geregelt wird.

Gemäß einer bevorzugten Ausführungsform der vorliegenden Erfindung wird das bei der Division durch das der Geschwindigkeit des Kraftfahrzeugs entsprechende Signal erhaltene Signal vor dem Vergleich mit dem vorgegebenen Schwellwert durch einen vorzugsweise digitalen Tiefpaß gefiltert. Durch die Verwendung dieses Tiefpasses werden hochfrequente Anteile des Signales, die beispielsweise durch Vibrationen des Fahrzeuges erzeugt werden, unterdrückt.

Vorteilhafterweise wird bei Vorliegen einer hinsichtlich des Erkennens einer schlechten Wegstrecke positiven Entscheidung ein Zähler auf einen vorgegebenen Anfangswert gesetzt, wobei nach dem Vorliegen einer hinsichtlich des Erkennens einer schlechten Wegstrecke negativen Entscheidung durch Unterschreiten des vorgegebenen Schwellwertes der auf den vorgegebenen Anfangswert gesetzte Zähler in vorgegebenen Zeitabständen heruntergezählt wird, wobei die Leuchtweitenregelung deaktiviert bleibt, solange der Zähler einen Wert ungleich null oder größer einem vorgegebenen unteren Schwellwert aufweist. Das Herunterzählen des Zählers kann vorzugsweise derart geschwindigkeitsabhängig gestaltet werden, daß bei jedem Zählvorgang ein der Geschwindigkeit des Kraftfahrzeugs entsprechender Wert von dem Wert des Zählers abgezogen wird. Somit wird nach Verlassen der schlechten Wegstrecke die Leuchtweitenregelung nach einer Zeitspanne wieder eingeschaltet, die abhängig von der Geschwindigkeit des Kraftfahrzeuges ist. Wenn sich somit das Kraftfahrzeug mit einer relativ großen Geschwindigkeit von der schlechten Wegstrecke wegbewegt, wird schon nach kurzer Zeit die Leuchtweitenregelung wieder zur Verfügung stehen, so daß die Leuchtweite den Fahrbedingungen angepaßt werden kann.

Weitere Vorteile und Merkmale der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: ein Blockschaltbild eines Ausführungsbeispiels einer erfindungsgemäßen Einrichtung;
- Fig. 2: ein Blockschaltbild eines weiteren Ausführungsbeispiels einer erfindungsgemäßen Einrichtung.

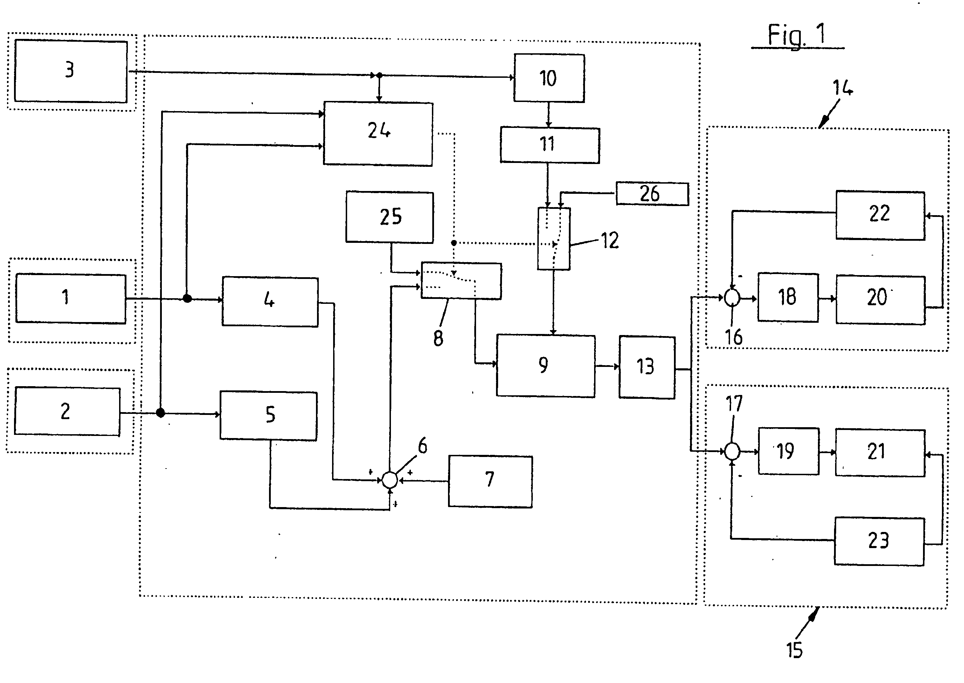

Zunächst wird auf Fig. 1 Bezug genommen. Die darin abgebildete Einrichtung umfaßt einen Vorderachsgeber 1 und einen Hinterachsgeber 2, die jeweils Signale in Abhängigkeit von der Lage der Fahrzeugkarosserie zu der Vorderachse bzw. der Hinterachse bilden können. Weiterhin umfaßt die in Fig. 1 abgebildete Einrichtung einen Geschwindigkeitsgeber 3, der ein der Geschwindigkeit des Fahrzeugs entsprechendes Signal ausgeben kann.

Die von dem Vorderachsgeber 1 und dem Hinterachsgeber 2 ausgegebenen Signale werden zwei Multiplikationseinheiten 4, 5 zugeführt, in denen die Signale des Vorderachsgebers 1 bzw. des Hinterachsgebers 2 mit einem Kennlinienfaktor multipliziert werden, der jeweils die zugehörige Kennlinie der die Signale erfassenden Sensoren im Bereich der Vorderachse bzw. der Hinterachse berücksichtigt. Die von den Multiplikationseinheiten 4, 5 ausgegebenen Signale werden in einem Differenzbildner 6 miteinander verknüpft, wobei hier zusätzlich noch ein von einer Offsetwerteinheit 7 vorgegebener Offsetwert dazu addiert wird. Das von dem Differenzbildner 6 ausgegebene Signal ist zur Ansteuerung von im nachfolgenden näher beschriebenen Stelleinrichtungen geeignet.

Das von dem Differenzbildner 6 ausgegebene Signal kann über ein Schaltelement 8 in einen Mittelwertbildner 9 eingegeben werden. Der Mittelwertbildner 9 ermöglicht es, die Stelleinrichtungen immer erst nach einer vorgegebenen veränderlichen Filterzeitkonstante mit einem neuen konstanten Stellsignal anzusteuern, wodurch die Lebensdauer der Stelleinrichtungen bzw. der von diesen umfaßten im nachfolgenden noch zu beschreibenden Stellelemente erhöht wird. Zur Bestimmung der Filterzeitkonstante wird das von dem Geschwindigkeitsgeber 3 ausgegebene Signal in einen Beschleunigungsgeber 10 eingegeben, wobei das Ausgangssignal des Beschleunigungsgebers 10 einem Filterzeitkonstantenerzeuger 11 zugeführt wird. Die von dem Filterzeitkonstantenerzeuger 11 erzeugte Filterzeitkonstante wird über ein Schaltelemente 12 dem Mittelwertbildner 9 zugeführt.

Das Ausgangssignal des Mittelwertbildners 9 wird einem Sollwertbildner 13 zugeführt, der jeder der beiden Stelleinrichtungen 14, 15 einen entsprechenden Sollwert zuführt. Die Stelleinrichtungen 14, 15 umfassen jeweils einen Subtrahierer 16, 17, einen mit diesem verbundenen Lageregler 18, 19 sowie jeweils ein Stellelement 20, 21, das zur Einstellung der Leuchtweite des beispielsweise mit ihm verbundenen Scheinwerfers des Kraftfahrzeuges vorgesehen ist. Weiterhin umfaßt jede der Stelleinrichtungen 14, 15 einen Lagesignalgeber 22, 23, der eine Rückmeldung der aktuellen Lage des Stellelementes an den Subtrahierer 16, 17 geben kann. Derartige Stelleinrichtungen 14, 15 mit vorgeschaltetem Mittelwertbildner 9 sind beispielsweise aus der EP 0 355 539 B1 bekannt.

Das in Fig. 1 abgebildete Ausführungsbeispiel der vorliegenden Erfindung umfaßt weiterhin eine Geländeerkennungseinheit 24, der die Signale des Vorderachsgebers 1, des Hinterachsgebers 2 und des Geschwindigkeitsgebers 3 zugeführt werden können. Für den Fall, daß die Geländeerkennungseinheit 24 die Entscheidung trifft, daß sich das Kraftfahrzeug auf einer schlechten Wegstrecke befindet, kann es entweder veranlassen, daß die Leuchtweite des Kraftfahrzeuges auf einen vorgegebenen Wert eingeregelt wird, oder aber veranlassen, daß die Leuchtweite des Kraftfahrzeuges konstant auf dem Wert gehalten wird, der beispielsweise zum Zeitpunkt der hinsichtlich des Erkennens einer schlechten Wegstrecke positiven Entscheidung eingestellt war.

Die Einstellung der Leuchtweite auf einen vorgegebenen Wert bei Erkennung einer schlechten Wegstrecke kann durch Ansteuerung des Schaltelementes 8 durch die Geländeerkennungseinheit 24 erzielt werden. Hierzu ist das Schaltelement 8 mit einer Vorgabeeinheit 25 verbunden, die dem Schaltelement 8 beispielsweise einen der Leuchtweite des Kraftfahrzeuges bei Normallage entsprechenden Wert zuführt. Als Normallage des Kraftfahrzeuges wird in der Regel die Neigung des Kraftfahrzeuges ohne Beladung mit einem Fahrer auf ebenem Untergrund angesehen. Bei entsprechender Ansteuerung durch die Geländeerkennungseinheit 24 schaltet das Schaltelement 8 den von der Vorgabeeinheit 25 vorgegebenen, der Normallage des Kraftfahrzeuges entsprechenden Wert der Leuchtweite zu dem Mittelwertbildner 9 durch.

Das Konstanthalten der Leuchtweite kann durch Ansteuern des Schaltelementes 12 durch die Geländeerkennungseinheit 24 erfolgen. Durch eine derartige Ansteuerung kann eine von einem entsprechenden Zeitkonstantenerzeuger 26 erzeugte Zeitkonstante zu dem Mittelwertbildner 9 durchgeschaltet werden. Ein Einfrieren der Leuchtweitenriegelung geschieht dann für die Dauer der von dem Zeitkonstantenerzeuger 26 ausgegebenen Zeitkonstante, so daß bei entsprechend großer vorgegebener Zeitkonstante die Leuchtweitenregelung für einen entsprechenden Zeitraum deaktiviert wird, so daß die Leuchtweite konstant bleibt.

Die Geländeerkennungseinheit 24 kann in einer Anordnung gemäß Fig. 1 gemäß nachfolgend beschriebenem Verfahren eine Entscheidung treffen, ob eine schlechte Wegstrecke vorliegt oder nicht.

In regelmäßigen oder geschwindigkeitsabhängigen Zeitabständen wird eine Differenz der beiden Ausgangssignale des Vorderachsgebers 1 und des Hinterachsgebers 2 innerhalb der Geländeerkennungseinheit 24 gebildet und abgespeichert. Von einem derartig gebildeten Differenzsignal wird ein unmittelbar davor ermitteltes und abgespeichertes Differenzsignal subtrahiert. Das Ergebnis dieser Subtraktion wird durch eine Größe dividiert, die der momentanen Raddrehzahl entspricht und aus dem Signal des Geschwindigkeitsgebers 3 ermittelt wird.

Das durch diese Division gewonnene Signal wird vorzugsweise mit einem digitalen Tiefpaß gefiltert. Das gefilterte Signal wird mit einem vorgegebenen Schwellwert verglichen. Überschreitet das ermittelte und gefilterte Signal den vorgegebenen Schwellwert, so wird ein von der Geländeerkennungseinheit 24 umfaßter Zähler auf einen vorgegebenen Anfangswert gesetzt. Solange dieser Zähler ungleich 0 oder ungleich einem vorgegebenen unteren Schwellwert ist, wird entweder durch die Geländeerkennungseinheit 24 durch Ansteuerung des Schaltelementes 12 die Leuchtweitenregelung deaktiviert oder aber durch Ansteuerung des Schaltelementes 8 die Leuchtweite auf einen vorgegebenen Wert eingeregelt.

Wenn das durch Division und Filterung gebildete Signal unter den Schwellwert fällt, wird der von der Geländeerkennungseinheit 24 umfaßte Zähler schrittweise heruntergezählt. Das Herunterzählen des Zählers kann entweder in konstanten Zeitabständen um konstante Beträge erfolgen. Es besteht aber auch die Möglichkeit, die Geschwindigkeit des Fahrzeuges bei dem Herunterzählen des Zählers zu berücksichtigen. Dies kann beispielsweise dadurch geschehen, daß in konstanten Zeitabständen ein der Geschwindigkeit des Fahrzeuges entsprechender Wert von dem Wert des Zählers abgezogen wird, so daß bei höheren Geschwindigkeiten ein schnelleres Herunterzählen des Zählers erfolgt. Wenn der Wert des Zählers gleich 0 ist bzw. unter der vorgegebenen Schwelle liegt, werden das Schaltelement 12 bzw. das Schaltelement 8 derart angesteuert, daß die für normale Wegstrecken vorgesehene Leuchtweitenregelung wieder aktiviert wird.

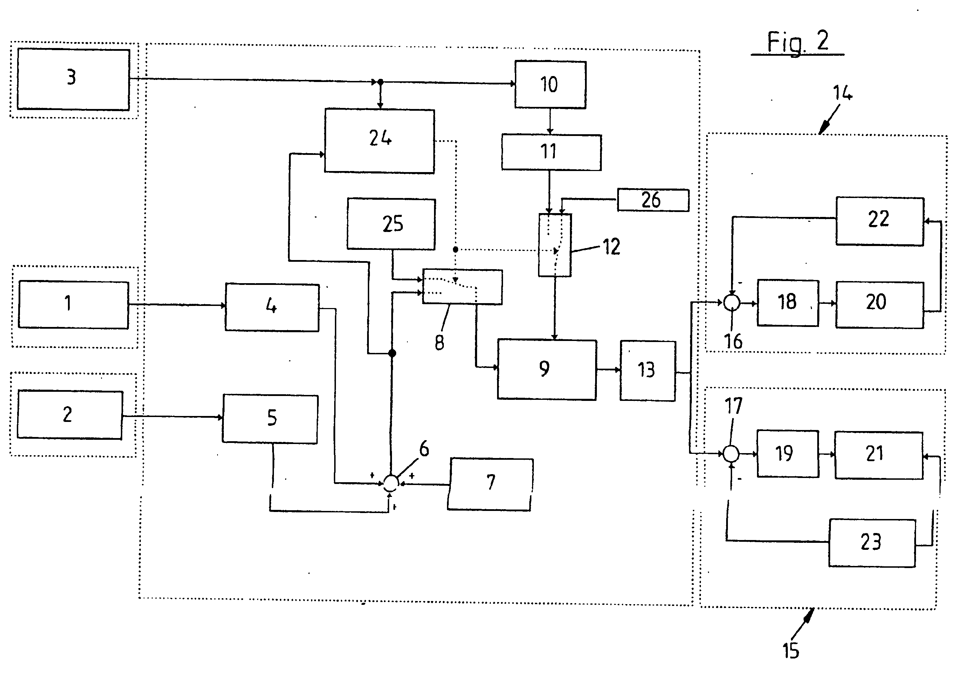

Bei der in Fig. 2 abgebildeten Ausführungsform einer erfindungsgemäßen Einrichtung werden der Geländeerkennungseinheit 24 neben dem Signal des Geschwindigkeitsgebers 3 nicht die Signale des Vorderachsgebers 1 bzw. des Hinterachsgebers 2 sondern das Ausgangssignal des Differenzbildners 6 zugeführt. Das Ausgangssignal des Differenzbildners 6 wird in konstanten oder geschwindigkeitsabhängigen Zeitabständen in der Geländeerkennungseinheit 24 abgespeichert. Von einem aktuellen Signal wird das unmittelbar zuvor abgespeicherte Signal abgezogen und wie bei der Ausführungsform gemäß Fig. 1 durch eine Größe dividiert, die der momentanen Raddrehzahl entspricht. Daran anschließend wird weiter verfahren wie oben zu Fig. 1 beschrieben.

## Patentansprüche

1. Verfahren zur Regelung der Leuchtweite eines Kraftfahrzeuges, bei dem an der Vorderachse und der Hinterachse Signale gemessen werden, die von der relativen Stellung der Fahrzeugkarosserie zu der Vorderachse bzw. zu der Hinterachse abhängen, bei dem weiterhin ein der Geschwindigkeit des Kraftfahrzeuges entsprechendes Signal gebildet wird, wobei weiterhin die an der Vorderachse und an der Hinterachse gemessenen Signale sowie das der Geschwindigkeit des Kraftfahrzeugs entsprechende Signal derart verarbeitet werden, daß eine Entscheidung über das Vorliegen einer schlechten Wegstrecke getroffen werden kann, **gekennzeichnet durch** folgende Verfahrensschritte:
- die Differenz der zu einem ersten Zeitpunkt an der Vorderachse und der Hinterachse gemessenen Signale wird gebildet und abgespeichert;
- die Differenz der zu einem zweiten, späteren Zeitpunkt an der Vorderachse und der Hinterachse gemessenen Signale wird gebildet;
- die Differenz der beiden vorgenannten Differenzen wird gebildet;
- das in dem vorigen Verfahrensschritt erhaltene Signal wird **durch** ein der Geschwindigkeit des Kraftfahrzeugs entsprechendes Signal dividiert;
- das bei dieser Division erhaltene Signal wird mit einem vorgegebenen Schwellwert verglichen;
- wenn das bei der Division erhaltene Signal den Schwellwert übersteigt, wird entschieden, daß eine schlechte Wegstrecke vorliegt.

2. Verfahren nach dem Oberbegriff des Anspruchs 1, **gekennzeichnet durch** die folgenden Verfahrennschritte:
- die an der Vorderachse und der Hinterachse gemessenen Signale werden jeweils mit einem Kennlinienfaktor multipliziert, der die jeweilige Kennlinie der die Signale erfassenden Sensoren berücksichtigt;
- die Differenz der zu einem ersten Zeitpunkt an der Vorderachse und der Hinterachse gemessenen und mit dem jeweiligen Kennlinienfaktor multiplizierten Signale wird gebildet und abgespeichert;
- die Differenz der zu einem zweiten, späteren Zeitpunkt an der Vorderachse und der Hinterachse gemessenen und mit dem jeweiligen Kennlinienfaktor multiplizierten Signale wird gebildet;
- die Differenz der beiden vorgenannten Differenzen wird gebildet;
- das in dem vorigen Verfahrensschritt erhaltene Signal wird **durch** ein der Geschwindigkeit des Kraftfahrzeugs entsprechendes Signal dividiert;
- das bei dieser Division erhaltene Signal wird mit einem vorgegebenen Schwellwert verglichen;
- wenn das bei der Division erhaltene Signal den Schwellwert übersteigt, wird entschieden, daß eine schlechte Wegstrecke vorliegt.

3. Verfahren nach Anspruch 2, **dadurch gekennzeichnet, daß** bei der Differenzbildung der mit dem jeweiligen Kennlinienfaktor multiplizierten Signale derart ein Offsetwert addiert wird, daß das so erhaltene Ausgangssignal als Sollwertsignal für die Leuchtweitenregelung Verwendung finden kann.

4. Verfahren nach einem der Ansprüche 1 bis 3, **dadurch gekennzeichnet, daß** die Verfahrensschritte der Differenzbildung, der Division und des Vergleichs mit dem vorgegebenen Schwellwert in regelmäßigen oder geschwindigkeitsabhängigen Zeitabständen wiederholt werden.

5. Verfahren nach einem der Ansprüche 1 bis 4, **dadurch gekennzeichnet, daß** bei Vorliegen einer hinsichtlich des Erkennens einer schlechten Wegstrecke positiven Entscheidung die Leuchtweite des Kraftfahrzeugs auf einen vorgegebenen Wert, der vorzugsweise dem Wert bei Normallage des Kraftfahrzeugs entspricht, eingestellt wird.

6. Verfahren nach einem der Ansprüche 1 bis 4, **dadurch gekennzeichnet**, bei Vorliegen einer hinsichtlich des Erkennens einer schlechten Wegstrecke positiven Entscheidung die Leuchtweite des Kraftfahrzeugs konstant auf dem zum Zeitpunkt der Entscheidung vorliegenden Wert gehalten wird.

7. Verfahren nach einem der Ansprüche 1 bis 6, **dadurch gekennzeichnet, daß** das bei der Division durch das der Geschwindigkeit des Kraftfahrzeugs entsprechende Signal erhaltene Signal vor dem Vergleich mit dem vorgegebenen Schwellwert durch einen, vorzugsweise digitalen, Tiefpaß gefiltert wird.

8. Verfahren nach einem der Ansprüche 1 bis 7, **dadurch gekennzeichnet, daß** bei Vorliegen einer hinsichtlich des Erkennens einer schlechten Wegstrecke positiven Entscheidung ein Zähler auf einen vorgegebenen Anfangswert gesetzt wird, wobei nach dem Vorliegen einer hinsichtlich des Erkennens einer schlechten Wegstrecke negativen Entscheidung durch Unterschreiten des vorgegebenen Schwellwertes der auf den vorgegebenen Anfangswert gesetzte Zähler in vorgegebenen Zeitabständen heruntergezählt wird, wobei die Leuchtweitenregelung deaktiviert bleibt, solange der Zähler einen Wert ungleich null oder größer einem vorgegebenen unteren Schwellwert aufweist.

9. Verfahren nach Anspruch 8, **dadurch gekennzeichnet, daß** das Herunterzählen des Zählers derart geschwindigkeitsabhängig gestaltet wird, daß bei jedem Zählvorgang ein der Geschwindigkeit des Kraftfahrzeugs entsprechender Wert von dem Wert des Zählers abgezogen wird.

10. Einrichtung zur Regelung der Leuchtweite eines Kraftfahrzeuges zur Durchführung eines Verfahrens nach einem der Ansprüche 1 bis 9, umfassend einen Vorderachsgeber (1) und einen Hinterachsgeber (2), die Signale in Abhängigkeit von der Lage der Fahrzeugkarosserie zu der Vorderachse und der Hinterachse des Fahrzeuges bilden können, wobei die Einrichtung weiterhin Stelleinrichtungen (14, 15) umfaßt, die die Leuchtweite des Kraftfahrzeuges in Abhängigkeit von den Signalen des Vorderachsgebers (1) bzw. des Hinterachsgebers (2) einstellen können, wobei die Einrichtung weiterhin einen Geschwindigkeitsgeber (3), der ein der Geschwindigkeit des Fahrzeugs entsprechendes Signal ausgeben kann, und eine Geländeerkennungseinheit (24) umfaßt, die aufgrund der Signale des Vorderachsgebers (1) und des Hinterachsgebers (2) sowie des Geschwindigkeitsgebers (3) entscheiden kann, ob sich das Kraftfahrzeug auf einer schlechten Wegstrecke bewegt, **dadurch gekennzeichnet, daß** die Geländeerkennungseinheit (24) mit dem Vorderachsgeber (1), dem Hinterachsgeber (2) und dem Geschwindigkeitsgeber (3) verbunden ist, wobei die Geländeerkennungseinheit (24) die Differenz der Signale von Vorderachsgeber (1) und Hinterachsgeber (2) bilden und speichern kann, wobei die Geländeerkennungseinheit (24) weiterhin von der Differenz der Signale von Vorderachsgeber (1) und Hinterachsgeber (2) eine zuvor gebildete Differenz der Signale von Vorderachsgeber (1) und Hinterachsgeber (2) subtrahieren kann, wobei die Geländeerkennungseinheit (24) weiterhin das durch diese Subtraktion erhaltene Signal durch ein der Geschwindigkeit des Fahrzeuges entsprechendes Signal dividieren kann und das bei dieser Division erhaltene Signal mit einem vorgegebenen Schwellwert derart vergleichen kann, daß die Geländeerkennungseinheit (24) bei Überschreiten des Schwellwertes durch das bei der vorgenannten Division erhaltene Signal entscheidet, daß eine schlechte Wegstrecke vorliegt.

11. Einrichtung nach dem Oberbegriff des Anspruchs 10, **dadurch gekennzeichnet, daß** die Einrichtung weiterhin Multiplikationseinheiten (4, 5) umfaßt, die mit dem Vorderachsgeber (1) und dem Hinterachsgeber (2) verbunden sind und deren Ausgangssignale jeweils mit einem Kennlinienfaktor multiplizieren können, der die jeweilige Kennlinie der die Signale erfassenden Sensoren im Bereich von Vorderachse und Hinterachse berücksichtigt, wobei die Einrichtung weiterhin einen Differenzbildner (6) umfaßt, der die von den Multiplikationseinheiten (4, 5) ausgegebenen Signale voneinander subtrahieren kann, wobei weiterhin die Geländeerkennungseinheit (24) mit den Ausgängen des Geschwindigkeitsgebers (3) und des Differenzbildners (6) verbunden ist, wobei die Geländeerkennungseinheit (24) die Ausgangssignale des Differenzbildners (6) abspeichern kann und von den Ausgangssignalen des Differenzbildners (6) den jeweils zuvor abgespeicherten Wert des Ausgangssignals des Differenzbildners (6) subtrahieren kann, wobei die Geländeerkennungseinheit (24) weiterhin das durch diese Subtraktion erhaltene Signal durch ein der Geschwindigkeit des Fahrzeuges entsprechendes Signal dividieren kann und das bei dieser Division erhaltene Signal mit einem vorgegebenen Schwellwert derart vergleichen kann, daß die Geländeerkennungseinheit (24) bei Überschreiten des Schwellwertes durch das bei der vorgenannten Division erhaltene Signal entscheidet, daß eine schlechte Wegstrecke vorliegt.

12. Einrichtung nach einem der Ansprüche 10 oder 11, **dadurch gekennzeichnet, daß** die Einrichtung weiterhin ein Schaltelement (12) umfaßt, durch dessen Ansteuerung durch die Geländeerkennungseinheit (24) bei Vorliegen einer positiven Entscheidung hinsichtlich des Erkennens einer schlechten Wegstrecke die Leuchtweitenregelung deaktiviert werden kann.

13. Einrichtung nach einem der Ansprüche 10 bis 12, **dadurch gekennzeichnet, daß** die Einrichtung weiterhin ein Schaltelement (8) umfaßt, durch dessen Ansteuerung durch die Geländeerkennungseinheit (24) bei Vorliegen einer positiven Entscheidung hinsichtlich des Erkennens einer schlechten Wegstrecke die Leuchtweite auf einen vorgegebenen Wert eingestellt werden kann, wobei der vorgegebene Wert vorzugsweise der Leuchtweite bei Normallage des Kraftfahrzeuges entspricht.

14. Einrichtung nach einem der Ansprüche 10 bis 13, **dadurch gekennzeichnet, daß** die Geländeerkennungseinheit (24) einen digitalen Tiefpaßfilter umfaßt, mittels dem das durch Division durch das der Geschwindigkeit des Kraftfahrzeuges entsprechende Signal erhaltene Signal vor dem Vergleich mit dem vorgegebenen Schwellwert gefiltert werden kann.

15. Einrichtung nach einem der Ansprüche 10 bis 14, **dadurch gekennzeichnet, daß** die Geländeerkennungseinheit (24) einen Zähler umfaßt, der bei einer hinsichtlich des Erkennens einer schlechten Wegstrecke positiven Entscheidung auf einen vorgegebenen Anfangswert gesetzt und bei einer hinsichtlich des Erkennens einer schlechten Wegstrecke negativen Entscheidung heruntergezählt werden kann.

## Claims

1. Method for controlling the lighting distance of a vehicle, in which signals are measured on the front axle and on the rear axle, depending on the relative position of the vehicle bodywork to the front axle or to the rear axle, in which a signal corresponding to the speed of the vehicle is also produced, in which the signals measured on the front axle and on the rear axle and the signal corresponding to the speed of the vehicle are also processed in such a way that a decision can be made on there being a bad stretch of road, **characterised by** the following stages:
- the difference in the signals measured at a first time on the front axle and on the rear axle is produced and stored;
- the difference in the signals measured at a second, later time on the front axle and on the rear axle is produced;
- the difference in both the differences indicated above is produced;
- the signal obtained in the previous stage is divided by a signal corresponding to the speed of the vehicle;
- the signal obtained by this division is compared with a preset threshold value;
- if the signal obtained by division exceeds the threshold value, it is decided that there is a bad stretch of road.

2. Method according to the generic term of claim 1, **characterised by** the following stages:
- the signals measured on the front axle and on the rear axle are each multiplied by a characteristic curve factor, which takes into consideration the relevant characteristic curve of the sensors detecting the signals;
- the difference in the signals measured at a first time on the front axle and on the rear axle and multiplied by the relevant characteristic curve factor is produced and stored;
- the difference in the signals measured at a second, later time on the front axle and on the rear axle and multiplied by the relevant characteristic curve factor is produced;
- the difference in both the differences indicated above is produced;
- the signal obtained in the previous stage is divided by a signal corresponding to the speed of the vehicle;
- the signal obtained by this division is compared with a preset threshold value;
- if the signal obtained by division exceeds the threshold value, it is decided that there is a bad stretch of road.

3. Method according to claim 2, **characterised in that** when the difference in the signals multiplied by the relevant characteristic curve factor is produced, an offset value is added in such a way that the output signal obtained in this way can be used as a control value signal for controlling the lighting distance.

4. Method according to claims 1 to 3, **characterised in that** the stages for producing the difference, dividing and comparing with the preset threshold value are repeated at regular intervals or depending on the speed.

5. Method according to one of claims 1 to 4, **characterised in that** if there is a positive decision regarding recognition of a bad stretch of road, the lighting distance of the vehicle is set at a preset value, preferably corresponding to the value when the vehicle is in its normal position.

6. Method according to one of claims 1 to 4, **characterised in that** if there is a positive decision regarding recognition of a bad stretch of road, the lighting distance of the vehicle is kept constant at the value it had at the time of the decision.

7. Method according to one of claims 1 to 6, **characterised in that** the signal obtained by division by the signal corresponding to the speed of the vehicle is filtered by a low-pass, preferably digital, before comparison with the preset threshold value.

8. Method according to one of claims 1 to 7, **characterised in that** if there is a positive decision regarding recognition of a bad stretch of road, a counter is set at a preset initial value, in which after there is a negative decision regarding recognition of a bad stretch of road by failing to reach the threshold value, the counter set at the preset initial value is counted down at preset intervals, in which control of the lighting distance remains deactivated as long as the counter has a value not equal to zero or greater than a preset bottom threshold value.

9. Method according to claim 8, **characterised in that** the counter is counted down depending on the speed in such a way that in each counting procedure a value corresponding to the speed of the vehicle is deducted from the value of the counter.

10. Device for controlling the lighting distance of a vehicle to implement a method according to one of claims 1 to 9, including a front axle transmitter (1) and a rear axle transmitter (2), which can produce signals depending on the position of the vehicle bodywork in relation to the front axle and the rear axle of the vehicle, in which the device also has adjusting devices (14, 15), which can adjust the lighting distance of the vehicle depending on the signals of the front axle transmitter (1) or the rear axle transmitter (2), in which the device also has a speed transmitter (3), which can transmit a signal corresponding to the speed of the vehicle, and a terrain recognition unit (24), which can decide whether the vehicle is moving on a bad stretch of road based on the signals of the front axle transmitter (1) and the rear axle transmitter (2) and the speed transmitter (3), **characterised in that** the terrain recognition unit (24) is connected to the front axle transmitter (1), the rear axle transmitter (2) and the speed transmitter (3), in which the terrain recognition unit (24) can produce and store the difference in the signals from the front axle transmitter (1) and the rear axle transmitter (2), in which the terrain recognition unit (24) can also subtract a difference in the signals from the front axle transmitter (1) and the rear axle transmitter (2) produced before from the difference in the signals from the front axle transmitter (1) and the rear axle transmitter (2), in which the terrain recognition unit (24) can also divide the signal obtained by this subtraction by a signal corresponding to the speed of the vehicle and compare the signal obtained by this division with a preset threshold value in such a way that, if this threshold value is exceeded by the signal obtained by the division indicated above, the terrain recognition unit (24) decides that there is a bad stretch of road.

11. Device according to the generic term of claim 10, **characterised in that** the device also has multiplication units (4, 5), which are connected to the front axle transmitter
(1) and the rear axle transmitter (2), the output signals of which can each be multiplied by a characteristic curve factor, which takes into consideration the relevant characteristic curve of the sensors detecting the signals in the area of the front axle and the rear axle, in which the device also has a difference producer (6), which can subtract the signals transmitted by the multiplication units (4, 5) from each other, in which the terrain recognition unit (24) is also connected to the outputs of the speed transmitter (3) and the difference producer (6), in which the terrain recognition unit (24) can store the output signals of the difference producer
(6) and can subtract the value of the output signal of the difference producer (6) stored before from the output signals of the difference producer (6), in which the terrain recognition unit (24) can also divide the signal obtained by this subtraction by a signal corresponding to the speed of the vehicle and the signal obtained by this division can be compared with a preset threshold value in such a way that, if the threshold value is exceeded by the signal obtained by the division indicated above, the terrain recognition unit (24) decides that there is a bad stretch of road.

12. Device according to one of claims 10 or 11, **characterised in that** the device also has a switch element (12), by control of which by the terrain recognition unit (24), if there is a positive decision regarding recognition of a bad stretch of road, control of the lighting distance can be deactivated.

13. Device according to one of claims 10 to 12, **characterised in that** the device also has a switch element (8), by control of which by the terrain recognition unit (24), if there is a positive decision regarding recognition of a bad stretch of road, the lighting distance can be adjusted to a preset value, in which it is preferable if the preset value corresponds to the lighting distance when the vehicle is in its normal position.

14. Device according to one of claims 10 to 13, **characterised in that** the terrain recognition unit (24) has a digital low-pass filter, by means of which the signal obtained by division by the signal corresponding to the speed of the vehicle can be filtered before comparison with the preset threshold value.

15. Device according to one of claims 10 to 14, **characterised in that** the terrain recognition unit (24) has a counter, which can be set to a preset initial value, if there is a positive decision regarding recognition of a bad stretch of road, and can be counted down, if there is a negative decision regarding recognition of a bad stretch of road.

## Revendications

1. Procédé de réglage de la portée lumineuse d'un véhicule automobile, dans lequel des signaux sont mesurés au niveau de l'essieu avant et au niveau de l'essieu arrière, lesquels dépendent de la position relative de la carrosserie du véhicule par rapport à l'essieu avant et à l'essieu arrière, respectivement, dans lequel est en outre formé un signal correspondant à la vitesse du véhicule, les signaux mesurés au niveau de l'essieu avant et au niveau de l'essieu arrière ainsi que le signal correspondant à la vitesse du véhicule étant en outre traités de telle sorte qu'une décision sur la présence d'un parcours de mauvaise qualité, **caractérisé par** les étapes de procédé suivantes :
- on forme et on mémorise la différence entre les signaux mesurés à un premier instant au niveau de l'essieu avant et au niveau de l'essieu arrière ;
- on forme et on mémorise la différence entre les signaux mesurés à un deuxième instant ultérieur au niveau de l'essieu avant et au niveau de l'essieu arrière ;
- on forme la différence entre les deux différences précitées ;
- on divise le signal obtenu dans l'étape de procédé précédente par un signal correspondant à la vitesse du véhicule ;
- on compare le signal obtenu lors de cette division à une valeur seuil prédéterminée ;
- si le signal obtenu lors de la division dépasse vers le haut la valeur seuil, on décide être en présence d'un parcours de mauvaise qualité.

2. Procédé selon le préambule de la revendication 1, **caractérisé par** les étapes de procédé suivantes :
- on multiplie chacun des signaux mesurés au niveau de l'essieu avant et au niveau de l'essieu arrière par un facteur caractéristique qui tient compte de la ligne caractéristique respective des capteurs détectant les signaux ;
- on forme et on mémorise la différence entre les signaux mesurés à un premier instant au niveau de l'essieu avant et au niveau de l'essieu arrière et multipliés par le facteur caractéristique respectif ;
- on forme la différence entre les signaux mesurés à un deuxième instant ultérieur au niveau de l'essieu avant et au niveau de l'essieu arrière et multipliés par le facteur caractéristique respectif ;
- on forme la différence entre les deux différences précitées ;
- on divise le signal obtenu dans l'étape de procédé précédente par un signal correspondant à la vitesse du véhicule ;
- on compare le signal obtenu lors de cette division à une valeur seuil prédéterminée ;
- si le signal obtenu lors de la division dépasse vers le haut la valeur seuil, on détermine être en présence d'un parcours de mauvaise qualité.

3. Procédé selon la revendication 2, **caractérisé en ce que** lorsqu'on forme la différence entre les signaux multipliés par le facteur caractéristique respectif, on ajoute une valeur "offset" telle que le signal de sortie ainsi obtenu peut être utilisé à titre de signal de valeur de consigne pour le réglage de portée lumineuse.

4. Procédé selon l'une des revendications 1 à 3, **caractérisé en ce que** les étapes de procédé de la formation de la différence, de la division et de la comparaison avec la valeur seuil prédéterminée sont répétées à des intervalles temporels réguliers ou à des intervalles temporels en fonction de la vitesse.

5. Procédé selon l'une des revendications 1 à 4, **caractérisé en ce qu'**en présence d'une décision positive concernant la reconnaissance d'un parcours de mauvaise qualité, la portée lumineuse du véhicule est établie à une valeur prédéterminée qui correspond de préférence à la valeur en position normale du véhicule.

6. Procédé selon l'une des revendications 1 à 4, **caractérisé en ce qu'**en présence d'une décision positive concernant la reconnaissance d'un parcours de mauvaise qualité, la portée lumineuse du véhicule est maintenue constante à la valeur en présence à l'instant de la décision.

7. Procédé selon l'une des revendications 1 à 6, **caractérisé en ce que** le signal obtenu lors de la division par le signal correspondant à la vitesse du véhicule est filtré par un filtre passe-bas, de préférence numérique, avant la comparaison avec la valeur seuil prédéterminée.

8. Procédé selon l'une des revendications 1 à 7, **caractérisé en ce qu'**en présence d'une décision positive concernant la reconnaissance d'un parcours de mauvaise qualité, un compteur est mis à une valeur initiale prédéterminée, et après être en présence d'une décision négative concernant la reconnaissance d'un parcours de mauvaise qualité par dépassement vers le bas de la valeur seuil prédéterminée, le compteur mis à une valeur initiale prédéterminée est décrémenté à des intervalles temporels prédéterminés, le réglage de portée lumineuse restant désactivé tant que le compteur présente une valeur non égale à zéro ou supérieure à une valeur seuil inférieure prédéterminée.

9. Procédé selon la revendication 8, **caractérisé en ce que** la décrémentation du compteur est réalisée en fonction de la vitesse de telle sorte qu'à chaque opération de comptage, une valeur correspondant à la vitesse du véhicule est soustraite de la valeur du compteur.

10. Système pour régler la portée lumineuse d'un véhicule pour mettre en oeuvre un procédé selon l'une des revendications 1 à 9, comprenant un capteur d'essieu avant (1) et un capteur d'essieu arrière (2) qui peuvent former des signaux en fonction de la position de la carrosserie du véhicule par rapport à l'essieu avant et à l'essieu arrière du véhicule, le système comprenant en outre des dispositifs de réglage (14, 15) qui peuvent régler la portée lumineuse du véhicule en fonction des signaux du capteur d'essieu avant (1) ou du capteur d'essieu arrière (2), le système comprenant en outre un capteur de vitesse (3) qui peut émettre un signal correspondant à la vitesse du véhicule, et une unité de reconnaissance de terrain (24), qui peut déterminer, sur la base des signaux du capteur d'essieu avant (1) et du capteur d'essieu arrière (2) ainsi que du capteur de vitesse (3), si le véhicule se déplace sur un parcours de mauvaise qualité, **caractérisé en ce que** l'unité de reconnaissance de terrain (24) est reliée au capteur d'essieu avant (1), au capteur d'essieu arrière (2) et au capteur de vitesse (3), l'unité de reconnaissance de terrain (24) pouvant former et mémoriser la différence entre les signaux du capteur d'essieu avant (1) et du capteur d'essieu arrière (2), l'unité de reconnaissance de terrain (24) pouvant en outre soustraire de la différence entre les signaux du capteur d'essieu avant (1) et du capteur d'essieu arrière (2) une différence formée auparavant entre les signaux du capteur d'essieu avant (1) et du capteur d'essieu arrière (2), l'unité de reconnaissance de terrain (24) pouvant en outre diviser le signal obtenu par cette soustraction par un signal correspondant à la vitesse du véhicule et comparer le signal obtenu lors de cette division à une valeur seuil prédéterminée de telle sorte que l'unité de reconnaissance de terrain (24), en cas de dépassement vers le haut de la valeur seuil par le signal obtenu lors de la division précitée, décide que l'on est en présence d'un parcours de mauvaise qualité.

11. Système selon le préambule de la revendication 10, **caractérisé en ce que** le système comprend en outre des unités de multiplication (4, 5) qui sont reliées au capteur d'essieu avant (1) et du capteur d'essieu arrière (2) et qui peuvent multiplier leurs signaux de sortie par un facteur caractéristique respectif qui tient compte de la ligne caractéristique respective des capteurs détectant les signaux dans la zone de l'essieu avant et de l'essieu arrière, le système comprenant en outre un formateur de différence (6) qui peut soustraire les uns des autres les signaux émis par les unités de multiplication (4, 5), l'unité de reconnaissance de terrain (24) étant en outre reliée aux sorties du capteur de vitesse (3) et du formateur de différence (6), l'unité de reconnaissance de terrain (24) pouvant mémoriser les signaux de sortie du formateur de différence (6) et soustraire des signaux de sortie du formateur de différence (6) la valeur respective précédemment mémorisée du signal de sortie du formateur de différence (6), l'unité de reconnaissance de terrain (24) pouvant en outre diviser le signal obtenu par cette soustraction par un signal correspondant à la vitesse du véhicule et comparer le signal obtenu lors de cette division à une valeur seuil prédéterminée de telle sorte qu'en cas de dépassement vers le haut de la valeur seuil par le signal obtenu lors de la division précitée, l'unité de reconnaissance de terrain (24) décide que l'on est en présence d'un parcours de mauvaise qualité.

12. Système selon l'une des revendications 10 ou 11, **caractérisé en ce que** le système comprend en outre un élément de commutation (12) qui lors de son pilotage par l'unité de reconnaissance de terrain (24), peut désactiver le réglage de portée lumineuse lorsqu'on est en présence d'une décision positive concernant la reconnaissance d'un parcours de mauvaise qualité.

13. Système selon l'une des revendications 10 à 12, **caractérisé en ce que** le système comprend en outre un élément de commutation (8) qui lors de son pilotage par l'unité de reconnaissance de terrain (24), peut établir la portée lumineuse à une valeur prédéterminée, lorsqu'on est en présence d'une décision positive concernant la reconnaissance d'un parcours de mauvaise qualité, la valeur prédéterminée correspondant de préférence à la portée lumineuse en cas de position normale du véhicule.

14. Système selon l'une des revendications 10 à 13, **caractérisé en ce que** l'unité de reconnaissance de terrain (24) comprend un filtre passe-bas numérique au moyen duquel le signal obtenu par la division effectuée par le signal correspondant à la vitesse du véhicule peut être filtré avant la comparaison avec la valeur seuil prédéterminée.

15. Système selon l'une des revendications 10 à 14, **caractérisé en ce que** l'unité de reconnaissance de terrain (24) comprend un compteur qui peut être mis à une valeur initiale prédéterminée dans le cas d'une décision positive concernant la reconnaissance d'un parcours de mauvaise qualité et qui peut être décrémenté en cas de d'une décision négative concernant la reconnaissance d'un parcours de mauvaise qualité.
